# EUROPÄISCHE PATENTSCHRIFT

(11) **EP 3 223 582 B1**
(45) Veröffentlichungstag und Bekanntmachung des Hinweises auf die Patenterteilung: **03.06.2020**
(21) Anmeldenummer: 17160352.5
(22) Anmeldetag: 10.03.2017
(51) Int. Cl.: H05B 1/02, H05B 6/06, A47J 27/10

(54) **KOCHVORRICHTUNG MIT KALIBRIERFUNKTION**
COOKING APPARATUS HAVING A CALIBRATION FUNCTION
DISPOSITIF DE CUISSON COMPRENANT UNE FONCTION D'ÉTALONNAGE

(30) Priorität: 24.03.2016 DE 102016205005
(43) Veröffentlichungstag der Anmeldung: 27.09.2017
(73) Patentinhaber: BSH Hausgeräte GmbH, 81739 München (DE)
(72) Erfinder: Blatnik, Gregor, 2381 Podgorje (SI); Semeja, Uros, 3327 Smartno ob Paki (SI)

(56) Entgegenhaltungen:
- EP-A1- 2 945 460
- DE-A1- 3 815 686
- DE-A1- 19 821 439
- US-B2- 9 191 998

## Beschreibung

### Gebiet der Erfindung

Die Erfindung betrifft eine Kochvorrichtung mit einem Kochbehältnis, einer Heizvorrichtung und einem Temperatursensor. Des Weiteren betrifft die Erfindung ein Verfahren zur Umsetzung eines Temperatursensorsignals in eine zugehörige Temperatur in einer Kochvorrichtung.

### Hintergrund der Erfindung

Kochvorrichtungen zum Erhitzen von Flüssigkeiten und zur Zubereitung von Speisen sind in einer Vielzahl von unterschiedlichen Ausführungen erhältlich. Beispielsweise werden Multifunktionskocher angeboten, bei denen aus unterschiedlichen Koch- und Zubereitungsprogramme für die Zubereitung von Speisen ausgewählt werden kann. Bei derartigen Geräten, aber auch bei anderen Kochvorrichtungen ist eine Temperatursteuerung oder -regelung erforderlich, für die eine genaue Temperaturerfassung als Grundlage benötigt wird.

Das US-Patent US 9,191,998 B2 beschreibt eine Kochvorrichtung und ein Verfahren, wobei die Kochvorrichtung mindestens ein temperaturgesteuertes Heizelement, eine Benutzerschnittstelle, die es einem Benutzer ermöglicht, einen vordefinierten Kochgegenstand auszuwählen, und ein Prozessormodul umfasst, das Gardaten zum Kochen des ausgewählten vordefinierten Kochgegenstands bereithält und dem Benutzer während des Kochens Anzeigeinformationen bereitstellt. Die Gardaten können einen Kochvorgang oder -ablauf beschreiben.

In der deutschen Offenlegungsschrift DE 198 21 439 A1 ist eine sensorgesteuerte Garungseinheit mit Selbstkalibrierung beschrieben, die aus einem Kochfeld, einem Gargerät und einer Sensoreinheit besteht, wobei die Sensoreinheit die Temperatur des Gargutes in Gargerät mittelbar misst und entsprechende Signale an eine Steuereinheit des Kochfeldes zum Regeln der Heizleistung eines Heizelementes sendet. Die Sensoreinheit registriert in einem speziellen Kalibriermodus beim Kochen vom Wasser den zeitlichen Verlauf der Temperatur. Die Steuereinheit der detektiert eine festgelegte Konstanz des Temperaturverlaufs als Erreichen des Siedepunkts des Wassers und führt eine Selbstkalibrierung durch. Um eine möglichst genaue Selbstkalibrierung durchführen zu können, detektiert die Steuereinheit des Erreichen einer bestimmten Kalibrierkonstanz des Temperaturverlaufs als Ende einer Vorkalibrierphase und hält das Heizelement während einer darauffolgenden Kalibriermessphase abgeschaltet, in der die Sensoreinheit die Temperatur zu Selbstkalibrierung der Garungseinheit misst.

In der europäischen Patentanmeldung EP 2 945 460 A1 ist ein Verfahren zur Durchführung eines flüssigkeitsbasierten Kochprozesses für Speisen beschrieben, wobei eine Kochzonenanordnung verwendet wird, die eine Kochplatte mit einem Heizelement, eine Steuerung und einen Temperatursensor umfasst. Bei dem Verfahren misst die Steuereinheit die Flüssigkeitstemperatur der Flüssigkeit in einem Kochgefäß mit dem in die Flüssigkeit eingetauchten Temperatursensor und steuert die Flüssigkeitstemperatur.

Die deutsche Offenlegungsschrift DE 38 15 686 A1 beschreibt ein Ankoch-Verfahren insbesondere bei Haushalts-Induktionskochgeräten. Mittel des beschrieben Ankoch-Verfahrens wird die Ankochzeit beziehungswiese die Anheizzeit bei Bratvorgängen, die bei bekannten Induktions-Kochgeräten von ihrer Nennleistung bestimmt wird, wesentlich verkürzt. Durch einen vom Benutzer aktivierten Überlast-Ankochstoß wird das Induktions-Kochgerät zeitlich begrenzt auf mehr als 100% seiner Nennleistung gebracht. Hierbei überwachen Zeitgeber oder Temperaturüberwachungs-Schaltkreise wichtige Bauteile, um sie vor Ausfällen zu schützen. Das Ankoch-Verfahren eignet sich für den Betrieb vom Haushalts-Induktionskochgeräten.

Eine weitere Kochvorrichtung ist in der WO1997016943A2 offenbart. Darin ist ein Kochsystem, bestehend aus einem Kochfeld mit einer für elektromagnetische Felder durchlässigen Kochfläche und einem darauf stehenden, durch die Kochfläche hindurch fremdbeheizten Kochgeschirr, dessen Boden temperaturgeregelt ist, beschrieben.

### Der Erfindung zugrundeliegende Aufgabe

Mithin liegt der Erfindung die Aufgabe zugrunde, mittels eines Temperatursensors die Temperatur in einer Kochvorrichtung mit verbesserter Genauigkeit zu erfassen. Des Weiteren ist es Aufgabe der Erfindung, die Temperatur in der Kochvorrichtung so zu erfassen, dass der Temperatursensor nicht notwendigerweise in direktem Kontakt mit dem wässrigen Medium stehen muss. Des Weiteren ist es Aufgabe der Erfindung, eine Bestimmung der Temperatur in einer Kochvorrichtung zu ermöglichen, die von der jeweiligen Einbausituation des Temperatursensors, von den thermischen Übertragungsbedingungen und von der Wärmeübertragung zwischen Kochbehältnis und Temperatursensor zumindest weitgehend unabhängig ist.

### Erfindungsgemäße Lösung

Die Lösung der gestellten Aufgabe gelingt durch Bereitstellen einer Kochvorrichtung gemäß der Merkmalskombination des Patentanspruchs 1.

Der Siedepunkt des wässrigen Mediums stellt eine stabile Referenz für eine Kalibrierung der Umsetzung des Temperatursignals in die zugehörige Temperatur dar. Wenn das wässrige Medium siedet, wird der Wert des Temperatursensorsignals erfasst. Bei unterschiedlichen Geräten erhält man bei siedendem wässrigem Medium unterschiedliche Werte des Temperatursensorsignals, weil der erfasste Wert des Temperatursensorsignals insbesondere von der jeweiligen Einbausituation des Sensors, von der thermischen Wärmeleitfähigkeit zwischen dem Kochbehältnis und dem Temperatursensor, vom Abstand des Temperatursensors zur Innenwandung des Kochbehältnisses etc. abhängt. Insbesondere bei der indirekten Temperaturmessung, bei der der Temperatursensor nicht in direktem Kontakt mit dem wässrigen Medium steht, machen sich diese Einflussfaktoren bemerkbar. Die Siedetemperatur ist darüber hinaus vom jeweils herrschenden Luftdruck und damit auch von der Höhenlage abhängig, wobei sich bei niedrigem Luftdruck eine niedrigere Siedetemperatur ergibt als bei hohem Luftdruck. Der erfasste Wert des Temperatursensorsignals kennzeichnet daher die Einbausituation und die Wärmeübertragungseigenschaften zum Temperatursensor und hängt darüber hinaus vom herrschenden Luftdruck ab. Beispielweise wird bei gut ausgebildeter Wärmeübertragung zwischen der Wandung des Kochbehältnisses und dem Temperatursensor der Temperatursensor einen anderen Wert liefern als bei einer weniger guten Wärmeübertragung. Das Ziel ist nun, die Umsetzung des Temperatursensorsignals in eine zugehörige Temperatur dergestalt zu kalibrieren, dass man eine von den lokalen Einflussfaktoren weitgehend unabhängige Umsetzung des Temperatursensorsignals in eine zugehörige Temperatur erhält. Unter einer Kalibrierung ist dabei jedwelche Festlegung einer Umsetzung einer Ausgangsgröße in eine Zielgröße zu verstehen. Insbesondere ist unter einer Kalibrierung die Festlegung zu verstehen, wie Werte der Ausgangsgröße in die zugehörige Zielgröße umzusetzen sind.

Insofern wird vorgeschlagen, den bei siedendem wässrigem Medium erfassten Wert des Temperatursensorsignals als Basis für eine Kalibrierung der Umsetzung des Temperatursensorsignals in eine zugehörige Temperatur zu verwenden. Indem die Umsetzung des Temperatursensorsignals in eine zugehörige Temperatur basierend auf dem erfassten Wert des Temperatursignals kalibriert wird, wird erreicht, dass lokale Einflussfaktoren wie die Einbausituation und die Wärmeübertragungseigenschaften zum Temperatursensor keinen oder nur einen geringfügigen Einfluss auf die so ermittelte Temperatur haben. Dadurch steht eine Temperatur zur Verfügung, die von der jeweiligen baulichen Einbausituation und von den thermischen Übertragungseigenschaften weitgehend unabhängig ist. Dies hat auch den Vorteil, dass man von Bauteiltoleranzen weitgehend unabhängig ist und dass beispielsweise auch weniger passgenau hergestellte Bauteile verwendet werden können. Dabei wird das Temperatursensorsignal auf die tatsächliche Siedetemperatur des wässrigen Mediums kalibriert, so dass die Druckabhängigkeit der Siedetemperatur mit berücksichtigt wird und man eine zum herrschenden Luftdruck passende Kalibrierung erhält. Die ermittelte Temperatur kann als Basis für die Temperatursteuerung oder -regelung dienen, insbesondere beispielsweise als Basis für die Steuerung von verschiedenen Temperaturprogrammen. Auf diese Weise erhält man eine genauere Temperatursteuerung oder -regelung als bisher, was sich beispielsweise in einer verbesserten Qualität der zubereiteten Speisen wiederspiegelt.

Ein erfindungsgemäßes Verfahren gemäß Patentanspruch 13 dient zur Umsetzung eines Temperatursensorsignals in eine zugehörige Temperatur in einer Kochvorrichtung. Die Kochvorrichtung umfasst ein Kochbehältnis zur Aufnahme eines wässrigen Mediums, eine Heizvorrichtung zum Heizen des Kochbehältnisses und einen Temperatursensor, der an einer Außenseite des Kochbehältnisses an der Wandung angebracht ist, wobei der Temperatursensor dazu ausgelegt ist, eine Temperatur an einer vorbestimmten Stelle des Kochbehältnisses zu erfassen und in Abhängigkeit von der Temperatur ein Temperatursensorsignal zu erzeugen. Das Verfahren umfasst Schritte des Erfassens eines Werts des Temperatursensorsignals bei siedendem wässrigem Medium und des Kalibrierens der Umsetzung des Temperatursensorsignals in eine zugehörige Temperatur basierend auf dem erfassten Wert.

Entsprechend dem erfindungsgemäßen Verfahren wird bei siedendem Medium zunächst der Wert des Temperatursensorsignals erfasst. Dieser erfasste Wert variiert von Gerät zu Gerät und charakterisiert die jeweilige Einbausituation und die thermischen Umgebungsbedingungen und Übertragungseigenschaften im Umfeld des Temperatursensors. Die Siedetemperatur hängt darüber hinaus auch vom jeweiligen Luftdruck und somit auch von der Höhenlage ab. Die Umsetzung des Temperatursensorsignals in eine zugehörige Temperatur wird dann basierend auf diesem charakteristischen erfassten Wert bei siedendem Medium kalibriert, sodass man eine von den lokalen Einbauverhältnissen und Übertragungseigenschaften weitgehend freie Umsetzung des Temperatursensorsignals in eine zugehörige Temperatur erhält. Insbesondere wird man dadurch von Bauteiltoleranzen unabhängig, sodass beispielsweise auch weniger passgenau hergestellte Bauteile verwendet werden können, weil die jeweiligen Unterschiede mit Hilfe des erfassten Werts des Temperatursensorsignals bei siedendem Medium berücksichtigt werden können. Dabei wird das Temperatursensorsignal auf die tatsächliche Siedetemperatur des wässrigen Mediums kalibriert, so dass die Druckabhängigkeit der Siedetemperatur mitberücksichtigt wird und man eine zum herrschenden Luftdruck passende Kalibrierung erhält. Auf diese Weise kann eine genauere Temperatursteuerung oder -regelung für die Kochvorrichtung realisiert werden, sodass beispielsweise die verschiedenen Koch- und Zubereitungsprogramme mit höherer Genauigkeit durchgeführt werden können.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Vorzugsweise ist die Kochvorrichtung dazu ausgelegt, zur Kalibrierung des Temperatursensorsignals die Heizvorrichtung so zu steuern, dass das mit wässrigem Medium befüllte Kochbehältnis aufgeheizt wird, bis das wässrige Medium siedet und bei siedendem wässrigem Medium den Wert des Temperatursensorsignals zu erfassen. Die Kochvorrichtung steuert also sowohl den Aufheiz- als auch den Kalibriervorgang. Auf diese Weise ist sichergestellt, dass das wässrige Medium siedet, wenn die Kalibrierung durchgeführt wird.

Vorzugsweise ist die Kochvorrichtung dazu ausgelegt, anhand des Temperatursensorsignals zu erfassen, wann das wässrige Medium siedet und bei siedendem wässrigem Medium den Wert des Temperatursensorsignals zu erfassen. Wenn das Temperatursensorsignal einen Wert aufweist, der der Siedetemperatur des wässrigen Mediums entspricht, und dieser Wert des Temperatursensorsignals vorzugsweise über eine gewisse Zeitspanne hinweg stabil bleibt, dann kann die Kochvorrichtung davon ausgehen, dass das wässrige Medium siedet. In diesem Fall führt die Kochvorrichtung die Kalibrierung des Temperatursensorsignals durch, wobei der Wert des Temperatursensorsignals bei siedendem wässrigem Medium erfasst wird und basierend auf diesem Wert die Kalibrierung durchgeführt wird.

Vorzugsweise ist die Kochvorrichtung dazu ausgelegt, zu erfassen, ob das Temperatursensorsignal für eine vorbestimmte Zeitspanne stabil bleibt und ein Sieden des wässrigen Mediums anzeigt und nach Ablauf der Zeitspanne den Wert des Temperatursensorsignals zu erfassen. Sobald der Siedepunkt des wässrigen Mediums erreicht ist, bleibt die Temperatur des wässrigen Mediums konstant, denn die Temperatur kann nicht über den Siedepunkt hinaus weiter erhöht werden. Daher bleibt die Temperatur des wässrigen Mediums nach Erreichen des Siedepunkts stabil. Wenn das wässrige Medium siedet und das Temperatursensorsignal für eine vorbestimmte Zeitspanne stabil bleibt, kann also davon ausgegangen werden, dass definierte Ausgangsbedingungen für die Durchführung der Kalibrierung vorliegen. Insbesondere ist nach Ablauf der vordefinierten Zeitspanne die Hitze des siedenden Mediums infolge von Wärmeleitung zum Temperatursensor vorgedrungen, sodass der Temperatursensor sich auf einer Temperatur nahe der Siedetemperatur befindet. Das Einführen einer vordefinierten Zeitspanne zwischen dem Beginn des Siedens und der Erfassung des vom Temperatursensor gelieferten Werts sorgt also für eine wohldefinierte und reproduzierbar ablaufende Kalibrierung.

Vorzugsweise ist die Kochvorrichtung dazu ausgelegt, nach Ablauf der Zeitspanne eine zusätzliche Wartezeit abzuwarten und nach Ablauf der zusätzlichen Wartezeit den Wert des Temperatursensorsignals zu erfassen. Dadurch wird der thermische Ausgleich weiter verbessert.

Vorzugsweise handelt es sich bei der vorbestimmten Zeitspanne um eine Zeitspanne im Bereich von 50 Sekunden bis 300 Sekunden. Insbesondere kann die Zeitspanne beispielsweise 80 Sekunden betragen. Innerhalb dieser Zeitspanne tritt bereits ein Temperaturausgleich zwischen dem wässrigen Medium innerhalb des Kochbehältnisses und dem nahe der Wandung des Kochbehältnisses angeordneten Sensor auf.

Vorzugsweise ist der Temperatursensor dazu ausgelegt, eine indirekte Temperaturmessung durchzuführen. Bei einer indirekten Temperaturmessung steht der Temperatursensor nicht in direktem Kontakt mit dem wässrigen Medium, sondern steht nur indirekt über ein thermisch leitfähiges Material mit dem wässrigen Medium in thermischem Kontakt. Der Vorteil einer indirekten Temperaturmessung ist, dass der Temperatursensor nicht innerhalb des Kochbehältnisses angebracht sein muss und deshalb in der Innenwandung des Kochbehältnisses keine Durchbrüche oder Öffnungen zur Aufnahme des Temperatursensors erforderlich sind. Dadurch kann die Innenwandung des Kochbehältnisses einfacher gereinigt werden. Insofern ist die indirekte Temperaturmessung bei einer Kochvorrichtung von Vorteil. Da der Temperatursensor jedoch nicht in direktem Kontakt mit dem wässrigen Medium steht, kann sich die vom Temperatursensor erfasste Temperatur von der tatsächlichen Temperatur des wässrigen Mediums unterscheiden. Beispielsweise wird der außerhalb des Kochbehältnisses angeordnete Temperatursensor eine im Vergleich zur Temperatur des wässrigen Mediums niedrigere Temperatur messen.

Vorzugsweise steht der Temperatursensor mit dem im Kochbehältnis befindlichen wässrigen Medium nicht in Kontakt. Dies ist von Vorteil, denn an einem innerhalb des Kochbehältnisses angeordneten Temperatursensor würde sich beispielsweise Schmutz ablagern, außerdem wäre ein derartiger Temperatursensor insbesondere wegen der heißen Temperaturen einer Korrosion unterworfen.

Vorzugsweise ist der Temperatursensor von einer Innenwandung des Kochbehältnisses beabstandet angeordnet. Beispielsweise kann der Temperatursensor durch die Wandung des Kochbehältnisses vom wässrigen Medium getrennt sein. Dabei hängt der Abstand zwischen dem Temperatursensor und dem wässrigen Medium, dessen Temperatur erfasst werden soll, von der jeweiligen Einbausituation und auch von Bauteiltoleranzen ab.

Vorzugsweise erfasst der Temperatursensor eine gegenüber der Temperatur des siedenden wässrigen Mediums im Kochbehältnis niedrigere Temperatur. Beispielsweise dringt die Hitze des wässrigen Mediums infolge der Wärmeleitfähigkeit der Wandung des Kochbehältnisses zum Temperatursensor vor. Da die Wandung mit der kälteren Umgebung thermisch verbunden ist, kommt es hierbei zu einer gewissen Abkühlung. Insofern erfasst der Temperatursensor eine niedrigere Temperatur.

Vorzugsweise ist die Kochvorrichtung dazu ausgelegt, das Temperatursensorsignal so zu kalibrieren, dass dem erfassten Wert des Temperatursensorsignals eine fest vorgegebene Bezugstemperatur am Ort des Temperatursensors zugeordnet wird. Durch die Festsetzung, dass der erfasste Wert einer fix vorgegebenen Bezugstemperatur entspricht, wird eine Unabhängigkeit der Temperaturerfassung von lokalen Einflussfaktoren wie beispielsweise der Einbausituation des Temperatursensors, von thermischen Umgebungsbedingungen des Temperatursensors, von einer Wärmeübertragung vom siedenden Medium zum Temperatursensor etc. erreicht.

Vorzugsweise ist der erfasste Wert des Temperatursensorsignals kennzeichnend für eine Einbausituation des Temperatursensors, für thermische Umgebungsbedingungen des Temperatursensors, für eine Wärmeübertragung vom siedenden Medium zum Temperatursensor. Beispielsweise wird sich bei guter Wärmeübertragung vom siedenden Medium zum Temperatursensor und bei einer Einbausituation mit geringem Abstand zum wässrigen Medium ein anderer Wert des Temperatursensorsignals ergeben als bei weniger guter Wärmeübertragung vom siedenden Medium zum Temperatursensor und bei großem Abstand zum wässrigen Medium.

Vorzugsweise ist die Kalibrierung dazu ausgelegt, die Abhängigkeit der aus dem Temperatursensorsignal erhaltenen Temperatur von mindestens einem von Folgenden zu verringern oder zu beseitigen: von einer Einbausituation des Temperatursensors, von thermischen Umgebungsbedingungen des Temperatursensors, von einer Wärmeübertragung vom siedenden Medium zum Temperatursensor. Dadurch, dass diese Abhängigkeiten bei der Temperaturerfassung keinen wesentlichen Einfluss mehr haben, sinken auch die Anforderungen an die Passgenauigkeit der Bauteile, und es können kostengünstigere Bauteile mit höheren Toleranzen eingesetzt werden, so dass das Gerät verbilligt wird.

Vorzugsweise ist die Kalibrierung dazu ausgelegt, eine Umsetzung des Temperatursensorsignals in eine zugehörige Temperatur so einzustellen, dass die erhaltene Temperatur um den Einfluss einer Einbausituation des Temperatursensors, thermischer Umgebungsbedingungen des Temperatursensors, einer Wärmeübertragung vom siedenden Medium zum Temperatursensor ganz oder teilweise korrigiert ist.

Vorzugsweise ist die Kochvorrichtung dazu ausgelegt, die Kalibrierung des Temperatursensorsignals basierend auf dem erfassten Wert so durchzuführen, dass eine Abhängigkeit von mindestens einem von einer Einbausituation des Temperatursensors, thermischen Umgebungsbedingungen des Temperatursensors, einer Wärmeübertragung vom siedenden Medium zum Temperatursensor verringert oder beseitigt wird.

Vorzugsweise ist die Kochvorrichtung dazu ausgelegt, anhand des erfassten Werts des Temperatursensorsignals aus einer Mehrzahl von Konvertierungstabellen für eine Umsetzung des Temperatursensorsignals in eine zugehörige Temperatur eine geeignete Konvertierungstabelle auszuwählen. Die Kalibrierung der Umsetzung des Temperatursensorsignals in eine zugehörige Temperatur basierend auf dem erfassten Wert des Temperatursensorsignals wird in diesem Beispiel realisiert, indem in Abhängigkeit von dem erfassten Wert aus mehreren Konvertierungstabellen eine geeignete Konvertierungstabelle ausgewählt wird. Die ausgewählte Konvertierungstabelle stellt eine zum erfassten Wert und damit zu den jeweiligen lokalen Einflussfaktoren passende Umsetzung des Temperatursensorsignals in eine zugehörige Temperatur zur Verfügung.

Vorzugsweise ist die Kochvorrichtung dazu ausgelegt, zur Kalibrierung des Temperatursensorsignals ausgehend von dem erfassten Wert des Temperatursensorsignals einen Korrekturfaktor zu bestimmen, wobei die Kochvorrichtung dazu ausgelegt ist, die Umsetzung des Temperatursensorsignals in eine zugehörige Temperatur entsprechend dem Korrekturfaktor zu verändern. Mit diesem bei der Kalibrierung festgelegten Korrekturfaktor kann ein jeweiliger Wert des Temperatursensorsignals unmittelbar in eine zugehörige Temperatur umgerechnet werden.

Vorzugsweise ist die Kalibrierung des Temperatursensorsignals vom Benutzer durchführbar, wobei die Kochvorrichtung dazu ausgelegt ist, im Falle einer vom Benutzer durchgeführten Kalibrierung die Heizvorrichtung so zu steuern, dass das mit wässrigem Medium befüllte Kochbehältnis aufgeheizt wird, bis das wässrige Medium siedet und bei siedendem wässrigem Medium die Kalibrierung des Temperatursensorsignals durchzuführen. Bei einer vom Benutzer veranlassten Kalibrierung wird zunächst das wässrige Medium bis zum Siedepunkt aufgeheizt, und anschließend wird die Kalibrierung durchgeführt. Alternativ dazu könnte die Kalibrierung jedoch auch auf Seiten des Herstellers vorgenommen werden.

Vorzugsweise ist der Temperatursensor an der Unterseite des Kochbehältnisses angeordnet. Durch die Anordnung an der Unterseite des Kochbehältnisses kann die Temperatur des im Kochbehältnis befindlichen Volumens von wässrigem Medium direkt erfasst werden. Vorzugsweise weist die Kochvorrichtung ein Federelement auf, das dazu ausgelegt ist, den Temperatursensor gegen die Unterseite des Kochbehältnisses zu drücken.

Vorzugsweise umfasst die Kochvorrichtung zwei Temperatursensoren, nämlich den Temperatursensor, der an der Unterseite des Kochbehältnisses angeordnet ist und einen weiteren Temperatursensor, der im oberen Bereich des Kochbehältnisses angeordnet ist. Durch zwei Sensoren wird eine genauere Messung ermöglicht, darüber hinaus können durch das Vergleichen der beiden Temperaturwerte Fehler und Betriebsstörungen erkannt werden.

Vorzugsweise handelt es sich bei dem Temperatursensor um einen Widerstandssensor. Bei einem Widerstandssensor wird ausgenutzt, dass der Widerstand von verschiedenen Materialien eine Temperaturabhängigkeit aufweist. Vorzugsweise handelt es sich bei dem Temperatursensor um einen Heißleiter. Ein Heißleiter weist bei einer niedrigen Temperatur einen hohen Widerstand und bei einer hohen Temperatur einen niedrigen Widerstand auf. Alternativ dazu handelt es sich bei dem Temperatursensor vorzugsweise um einen Kaltleiter. Ein Kaltleiter weist bei einer niedrigen Temperatur einen geringen Widerstand und bei einer hohen Temperatur einen hohen Widerstand auf.

Vorzugsweise ist die Kochvorrichtung dazu ausgelegt, die Heizvorrichtung so zu steuern, dass sie entweder in einem kontinuierlichen Betrieb oder in einem intermittierenden Betrieb heizt. Vorzugsweise ist die Heizvorrichtung im kontinuierlichen Betrieb durchgehend eingeschaltet und im intermittierenden Betrieb abwechselnd für gewisse Zeitspannen ein- und ausgeschaltet. Im kontinuierlichen Betrieb ist die Heizvorrichtung ständig eingeschaltet, und insofern wird dem wässrigen Medium die maximal mögliche Heizleistung zugeführt. Dabei eignet sich der kontinuierliche Betrieb insbesondere dazu, das flüssige Medium in kurzer Zeit aufzuheizen und auf Siedetemperatur zu bringen. Wenn dagegen die Heizvorrichtung im intermittierenden Betrieb geheizt wird, dann wird dem wässrigen Medium eine im Vergleich zur maximal möglichen Heizleistung verringerte Heizleistung zugeführt, wobei die zugeführte Heizleistung vom Verhältnis der Einschaltzeitspanne zur Ausschaltzeitspanne abhängt, also vom sogenannten Tastverhältnis. Heizen im intermittierenden Betrieb ist beispielsweise dann vorteilhaft, wenn die Siedetemperatur des wässrigen Mediums bereits erreicht ist. In diesem Fall ist es lediglich erforderlich, dem wässrigen Medium die zur Aufrechterhaltung des Siedens erforderliche Heizleistung zur Verfügung zu stellen. Durch den intermittierenden Heizbetrieb kann hier erreicht werden, dass die Zufuhr von überschüssiger Heizleistung, welche beispielsweise zu einem Überkochen und eventuell zu Verbrennungen führen könnte, vermieden wird.

Vorzugsweise ist die Kochvorrichtung dazu ausgelegt, die Heizvorrichtung so zu steuern, dass sie, wenn das wässrige Medium siedet, im intermittierenden Betrieb heizt. Wenn das wässrige Medium bereits siedet, ist es zur Aufrechterhaltung des Siedevorgangs lediglich erforderlich, dem wässrigen Medium eine verringerte Heizleistung zuzuführen. Dies kann im intermittierenden Heizbetrieb geschehen.

Vorzugsweise ist die Kochvorrichtung dazu ausgelegt, die Heizvorrichtung so zu steuern, dass sie während des Kalibriervorgangs im intermittierenden Betrieb betrieben wird. Der Kalibriervorgang wird erst dann durchgeführt, wenn das wässrige Medium siedet. In diesem Fall ist es zur Aufrechterhaltung des Siedevorgangs ausreichend, die Heizvorrichtung im intermittierenden Betrieb zu heizen.

Vorzugsweise ist die Kochvorrichtung dazu ausgelegt, die Heizvorrichtung so zu steuern, dass sie das wässrige Medium zunächst im kontinuierlichen Betrieb aufheizt und bei Erreichen einer vorgegebenen Umschalttemperatur vom kontinuierlichen Betrieb auf den intermittierenden Betrieb umschaltet. Während des anfänglichen Aufheizens ist es vorteilhaft, das wässrige Medium durch Zufuhr maximaler Heizleistung möglichst schnell auf Siedetemperatur zu bringen. Sobald jedoch die Siedetemperatur erreicht ist, muss dem wässrigen Medium lediglich die zur Aufrechterhaltung des Siedevorgangs notwendige Heizleistung zugeführt werden. Insofern ist es sinnvoll, bei Erreichen einer vorgegebenen Umschalttemperatur, welche vorzugsweise im Wesentlichen der Siedetemperatur des wässrigen Mediums entspricht, vom kontinuierlichen Heizbetrieb auf den intermittierenden Heizbetrieb umzuschalten.

Vorzugsweise handelt es sich bei der Kochvorrichtung um eines von Folgenden: einen Multifunktionskocher, einen elektrischen Kochtopf, einen Schnellkochtopf, einen Reiskocher, einen Dampfkochtopf. Bei derartigen Kochvorrichtungen ist eine genaue Temperaturerfassung, vorzugsweise mittels indirekter Temperaturerfassung, für die Temperatursteuerung oder -regelung erforderlich.

Vorzugsweise handelt es sich bei dem wässrigen Medium um Wasser. Die Verwendung von Wasser ermöglicht eine reproduzierbare Kalibrierung.

Vorzugsweise umfasst das Verfahren folgenden Schritt: Aufheizen des mit wässrigem Medium befüllten Kochbehältnisses, bis das wässrige Medium siedet, und Erfassen des Werts des Temperatursensorsignals bei siedendem wässrigem Medium.

Vorzugsweise umfasst das Verfahren folgende Schritte: Ermitteln, dass das Temperatursensorsignal bei siedendem wässrigem Medium für eine vorbestimmte Zeitspanne stabil ist, und Erfassen eines Werts des Temperatursensorsignals.

Vorzugsweise ist das Verfahren dazu ausgelegt, die Kalibrierung des Temperatursensorsignals basierend auf dem erfassten Wert so durchzuführen, dass eine Abhängigkeit von mindestens einem von einer Einbausituation des Temperatursensors, thermischen Umgebungsbedingungen des Temperatursensors, einer Wärmeübertragung vom siedenden Medium zum Temperatursensor verringert oder beseitigt wird.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1:: Fig. 1 zeigt eine perspektivische Darstellung einer Kochvorrichtung.
- Figur 2:: Fig. 2 zeigt eine schematische Übersicht über die Komponenten der Kochvorrichtu ng.
- Figur 3:: Fig. 3 zeigt, wie der in einer metallischen Kappe angeordnete Temperatursensor mittels eines Federelements gegen die Unterseite des Kochbehältnisses gedrückt wird.
- Figur 4a:: Fig. 4a zeigt die Aufheizung des wässrigen Mediums im Kochbehältnis als Funktion der Zeit.
- Figur 4b:: Fig. 4b zeigt die Heizleistung des Heizelements als Funktion der Zeit.
- Figur 5:: Fig. 5 zeigt, wie ein bei der Kalibrierung erfasster Widerstand des Temperatursensors dazu verwendet wird, aus mehreren möglichen Umsetzungstabellen für die Umsetzung von Widerstand in Temperatur eine geeignete auszuwählen.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

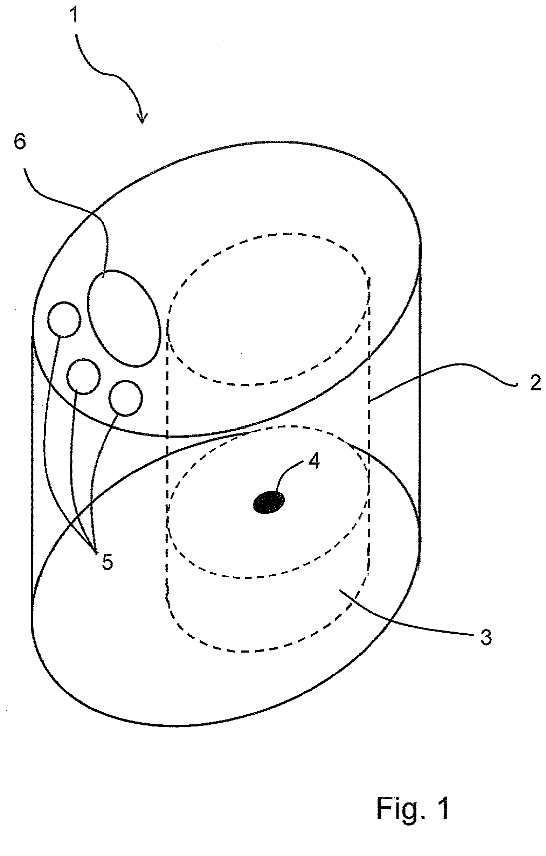

In Figur 1 ist eine Kochvorrichtung 1 gezeigt. Bei der Kochvorrichtung 1 kann es sich beispielsweise um einen Multikocher handeln, der eine Vielzahl von verschiedenen Programmen für die Zubereitung von verschiedenen Speisen zur Verfügung stellt. Beispielsweise bieten derartige Multikocher Programme zum Kochen von Reis, zum Backen, zum Dünsten, zum Dämpfen, zum Frittieren, für die Zubereitung von Suppen, Porridge, Joghurt, Marmelade etc. an. Bei der Kochvorrichtung 1 kann es sich jedoch auch um einen elektrischen Kochtopf, einen Reiskocher, einen Schnellkochtopf oder einen Dampfgarer etc. handeln. In allen genannten Beispielen weist die Kochvorrichtung 1 ein Kochbehältnis 2 zur Aufnahme des Kochguts bzw. der zuzubereitenden Speise sowie ein Heizelement 3 zum Aufheizen des Kochbehältnisses 2 auf. Das Heizelement 3 kann beispielsweise gemäß dem Prinzip der Induktionsbeheizung arbeiten. An der Unterseite der Kochbehältnisses 2 ist ein Temperatursensor 4 zur Erfassung und Überwachung der Temperatur des Kochbehältnisses 2 vorgesehen. Für den Fall, dass es sich bei der Kochvorrichtung 1 um einen Multikocher handelt, sind an der Bedienfront eine Mehrzahl von Bedienelementen 5 zur Auswahl eines geeigneten Zubereitungsprogramms sowie zur Auswahl von geeigneten Parametern für die Zubereitung vorgesehen. Darüber hinaus ist an der Bedienfront mindestens ein Anzeigeelement 6 angeordnet, welches das ausgewählte Zubereitungsprogramm, die ausgewählten Parameter sowie den Status der Programmabarbeitung anzeigt.

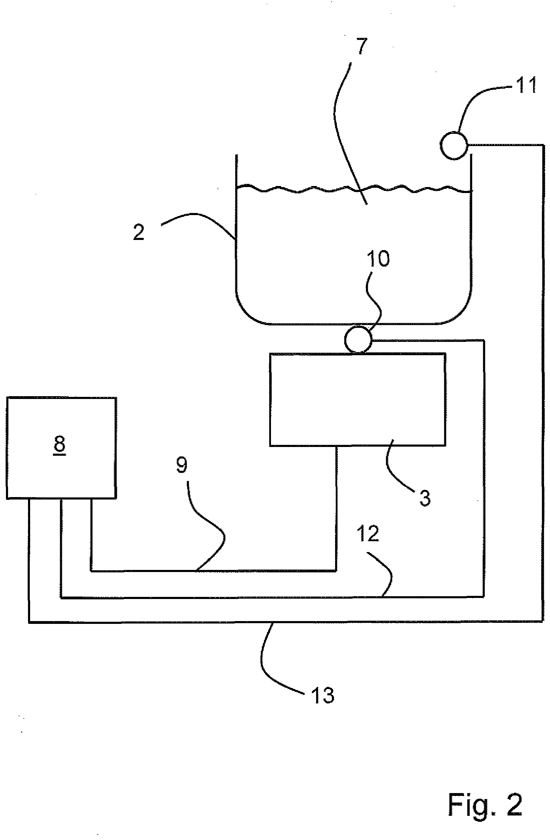

In Figur 2 sind die einzelnen Komponenten der Kochvorrichtung 1 schematisch dargestellt. In Figur 2 ist das Kochbehältnis 2 zu erkennen, das mit einem wässrigen Medium 7 befüllbar ist, beispielsweise mit Kochgut, mit einer Flüssigkeit, mit Wasser, etc. Außerdem ist das Heizelement 3 zu erkennen, das dazu ausgelegt ist, das im Kochbehältnis 2 befindliche wässrige Medium 7 aufzuheizen. Dabei wird die Operation des Heizelements 3 von einer Steuereinheit 8 gesteuert, die dem Heizelement 3 ein entsprechendes Steuersignal 9 zuführt. Das Heizelement 3 kann beispielsweise in einem kontinuierlichen Dauerbetrieb betrieben werden, bei dem das Heizelement 3 ständig eingeschaltet ist. Das Heizelement 3 kann aber beispielsweise auch in einem intermittierendem Betrieb bzw. gepulsten Betrieb heizen, wobei das Heizelement 3 gesteuert durch die Steuereinheit 8 abwechselnd für bestimmte Zeitspannen ein- und ausgeschaltet wird.

Zur Erfassung der Temperatur des wässrigen Mediums 7 im Kochbehältnis 2 sind zwei Temperatursensoren vorgesehen, nämlich ein unterer Temperatursensor 10 sowie ein oberer Temperatursensor 11. Der untere Temperatursensor 10 ist dazu ausgelegt, die Temperatur am Boden des Kochbehältnisses 2 zu erfassen. Der untere Temperatursensor 10 kann beispielsweise an der Unterseite des Bodens des Kochbehältnisses 2 in der Mitte angeordnet sein. Der obere Temperatursensor 11 ist dazu ausgelegt, die Temperatur des wässrigen Mediums 7 im oberen Bereich des Kochbehältnisses 2 zu erfassen. Der obere Temperatursensor 11 kann beispielsweise im oberen Bereich des Kochbehältnisses 2 oder oberhalb des Kochbehältnisses 2 angeordnet sein, beispielsweise an einem Deckel des Kochbehältnisses 2. Der obere Temperatursensor kann beispielsweise dazu vorgesehen sein, die Temperatur der Dampfphase im oberen Bereich des Kochbehältnisses 2 zu erfassen. Der untere Temperatursensor 10 und der obere Temperatursensor 11 können beispielsweise als Widerstandssensoren ausgebildet sein, beispielsweise als Heißleiter, die auch als NTC (Negative Temperature Coefficient) bezeichnet werden, oder als Kaltleiter, die auch als PTC (Positive Temperature Coefficient) bezeichnet werden. Bei Heißleitern nimmt der Widerstand des Temperatursensors mit zunehmender Temperatur ab, wohingegen bei Kaltleitern der Widerstand des Temperatursensors mit zunehmender Temperatur zunimmt. Wie in Figur 2 gezeigt, sind der untere Temperatursensor 10 und der obere Temperatursensor 11 an die Steuereinheit 8 angeschlossen, wobei der untere Temperatursensor 10 der Steuereinheit 8 ein erstes Temperatursensorsignal 12 zur Verfügung stellt und wobei der obere Temperatursensor 11 der Steuereinheit 8 ein zweites Temperatursensorsignal 13 liefert. Die Steuereinheit 8 ist dazu ausgelegt, das Heizelement 3 entsprechend dem ausgewählten Programm und entsprechend den von den Temperatursensoren 10 und 11 bereitgestellten Temperatursensorsignalen 12, 13 zu steuern bzw. zu regeln.

Um die Temperatur des wässrigen Mediums im Inneren des Kochbehältnisses 2 möglichst genau erfassen zu können, könnten die Temperatursensoren 10 und 11 im Kochbehältnis so angebracht sein, dass sie in direktem Kontakt mit dem flüssigen Medium stehen. Durch eine derartige direkte Temperaturmessung könnte die Temperatur mit hoher Genauigkeit erfasst werden. Jedoch müssten die Temperatursensoren 10 und 11 hierzu unmittelbar in der Innenwandung des Kochbehältnisses 2 angebracht sein. Unter hygienischen Aspekten vorteilhafter ist allerdings eine glatte Innenwandung des Kochbehältnisses 2, welche eine einfache Reinigung ermöglicht. Um dies zu erreichen, kann die Temperatur des Kochbehältnisses 2 mittels einer indirekten Temperaturmessung erfasst werden, bei der der jeweilige Temperatursensor nicht in direktem Kontakt mit dem wässrigen Medium 7 steht, sondern beispielsweise an der Außenseite des Kochbehältnisses 2 an der Wandung angebracht ist. Bei der indirekten Temperaturmessung steht der Temperatursensor 10 also nur indirekt über ein wärmeleitendes Material mit dem wässrigen Medium 7 in Kontakt.

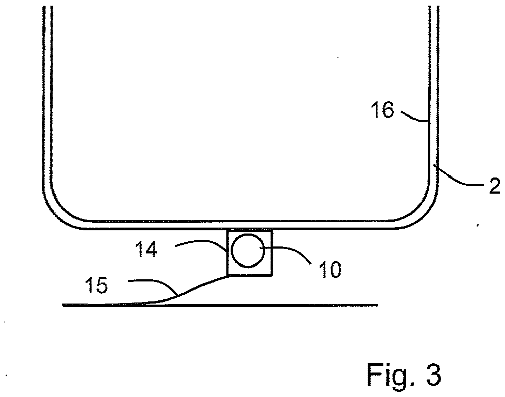

In Figur 3 ist für den unteren Temperatursensor 10 gezeigt, wie eine indirekte Temperaturmessung realisiert wird. Der untere Temperatursensor 10 wird von unten her federnd gegen den Boden des Kochbehältnisses 2 gedrückt. Der Temperatursensor 10 ist in einer metallischen Kappe 14 angeordnet, wobei zur Verbesserung der Wärmeleitung eine Silikonschicht, eine Silikonauflage, ein Silikonpolster oder eine Wärmeleitpaste, beispielsweise eine Paste auf Silikonbasis, zwischen dem unteren Temperatursensor 10 und der metallischen Kappe 14 vorgesehen sein kann. Die metallische Kappe 14 mit dem Temperatursensor 10 ist an einem Federelement 15 angebracht. Wenn das Kochbehältnis 2 in die Kochvorrichtung 1 eingesetzt ist, wird die metallische Kappe 14 durch das Federelement 15 von unten federnd gegen die Unterseite des Kochbehältnisses 2 gedrückt, um auf diese Weise einen thermischen Kontakt zur Wandung des Kochbehältnisses 2 herzustellen.

Bei der indirekten Temperaturmessung wird die Wärme vom wässrigen Medium 7 aus durch Wärmeleitung von der Innenwandung 16 des Kochbehältnisses 2 zum unteren Temperatursensor 10 übertragen. Daher hängt die Temperatur am Ort des unteren Temperatursensors 10 von einer Vielzahl von Einflussfaktoren ab. Beispielsweise hängt der vom unteren Temperatursensor 10 erfasste Temperaturwert vom Wärmeübergang zwischen dem Kochbehältnis 2 und der metallischen Kappe 14 ab und damit auch von der Beschaffenheit der Oberflächen und von der Anpresskraft, mit der die metallische Kappe 14 durch das Federelement 15 gegen die Unterseite des Kochbehältnisses 2 gepresst wird. Des Weiteren hängt die Wärmeübertragung vom wässrigen Medium 7 zum unteren Temperatursensor 10 von der Einbausituation des unteren Temperatursensors 10 ab, insbesondere davon, wie gut bzw. schlecht die Wärmeleitung zwischen der metallischen Kappe 14 und dem unteren Temperatursensor 10 ist. Dadurch hängen die mittels indirekter Temperaturmessung erfassten Temperaturwerte in starkem Maße von Fertigungsungenauigkeiten und Bauteiltoleranzen ab. Selbst relativ kleine Schwankungen in der Wärmeleitung zwischen dem unteren Temperatursensor 10 und dem Kochbehältnis 2 führen zu relativ starken Unterschieden bei der gemessenen Temperatur. Insofern wird der untere Temperatursensor 10 für jedes Gerät individuell unterschiedliche Temperaturmesswerte liefern, weil bei jedem Gerät die Einbausituation des Temperatursensors 10 und die Wärmeleiteigenschaften etwas anders sind. Eine fixe Umsetzung des vom unteren Temperatursensor erfassten Messwerts in eine Temperatur, etwa mittels einer Konvertierungstabelle, liefert daher keine wirklich genauen Temperaturwerte. Um eine genauere Temperaturmessung zu ermöglichen, wird daher vorgeschlagen, eine Kalibrierung des unteren Temperatursensors 10 durchzuführen. Im Folgenden ist beschrieben, wie eine derartige Kalibrierung des unteren Temperatursensors 10 durchgeführt werden kann.

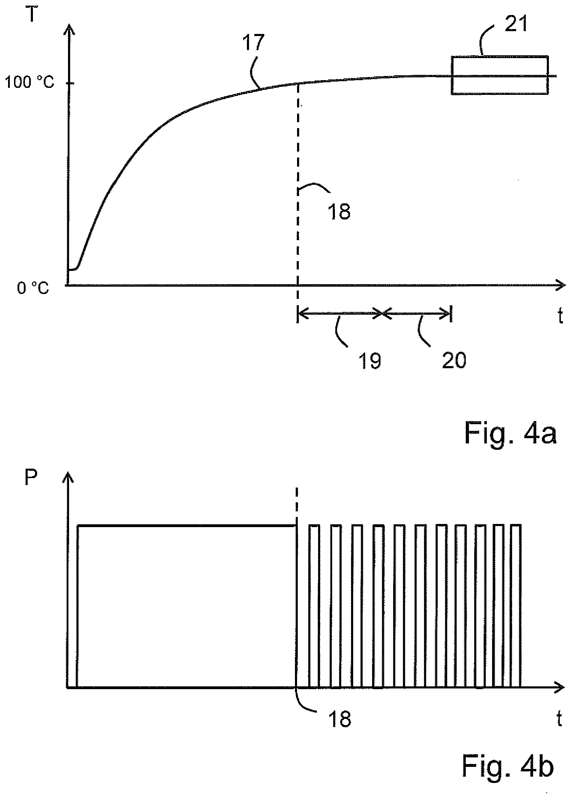

Zum Durchführen der Kalibrierung wird in das Kochbehältnis 2 eine bestimmte Menge Wasser eingefüllt und anschließend mittels des Heizelements 3 bis zum Siedepunkt hochgeheizt. Die entsprechende Aufheizkurve ist in Figur 4a dargestellt, wobei entlang der Hochachse die Temperatur des Wassers in Grad Celsius und entlang der Rechtsachse die Zeit in Sekunden angegeben ist. Die zugehörige Heizleistung des Heizelements 3 ist unterhalb von Figur 4a in Figur 4b aufgetragen, wobei in Figur 4b entlang der Hochachse die Heizleistung P und entlang der Rechtsachse wieder die Zeit in Sekunden aufgetragen ist. Zunächst wird das Wasser im kontinuierlichen Heizmodus geheizt, damit durch die kontinuierliche Energiezufuhr eine möglichst schnelle Aufheizung des Wassers auf Siedetemperatur erfolgt. Wie in Figur 4b erkennbar ist, ist die Heizleistung zunächst konstant, und in der Aufheizkurve 17 nimmt die Temperatur daher zunächst stetig zu. Sobald das Wasser siedet, schaltet die Steuereinheit 8 vom kontinuierlichen Heizmodus in den intermittierenden Heizmodus bzw. gepulsten Heizmodus um. Dies ist bei dem in Figur 4a und Figur 4b gezeigten Aufheizvorgang zum Zeitpunkt 18 der Fall. Anhand von Figur 4b ist erkennbar, dass nach dem Zeitpunkt 18 die Heizleistung des Heizelements 3 abwechselnd für eine gewisse Zeitspanne ein- und dann wieder für eine gewisse Zeitspanne ausgeschaltet wird, so dass sich eine intermittierende bzw. gepulste Heizleistung ergibt. Daher wird im intermittierenden Modus pro Zeiteinheit weniger Heizenergie auf das Wasser übertragen als im kontinuierlichen Heizmodus. Die Einschalt- und Ausschaltintervalle des Heizelements 3 sind im intermittierenden bzw. gepulsten Heizmodus so gewählt, dass die im zeitlichen Mittel auf das Wasser übertragene Heizleistung ausreicht, um den Siedevorgang aufrechtzuerhalten. Wie anhand der in Figur 4a gezeigten Aufheizkurve 17 zu erkennen ist, bewegt sich die Temperatur des Wassers nach dem Zeitpunkt 18 auf Siedetemperatur.

Zur Steuerung der Umschaltung zwischen dem Dauerheizmodus und dem intermittierenden Heizmodus wird abgefragt, ob die von dem unteren Temperatursensor 10 und von dem oberen Temperatursensor 11 erfassten Temperatursensorsignale 12, 13 vorgegebene Schwellwerte überschreiten. Beispielsweise kann die Umschaltung vom kontinuierlichen Heizmodus zum intermittierenden Heizmodus dann erfolgen, wenn der untere Temperatursensor 10 eine Temperatur von 97 °C erfasst, also eine Temperatur in der Nähe des Siedepunkts, während der obere Temperatursensor 11 eine Temperatur von mehr als 87 °C anzeigt. Zur Umschaltung des Heizmodus werden die von den Temperatursensoren 10 und 11 erfassten Temperatursensorsignale 12 und 13 der Steuereinheit 8 zugeführt und dort mit den jeweiligen Schwellwerten verglichen, wobei die Steuereinheit 8 bei Überschreiten der entsprechenden Schwellwerte den Heizmodus des Heizelements 3 entsprechend umschaltet. Durch die Umschaltung vom kontinuierlichen Heizmodus zum intermittierenden Heizmodus bei Erreichen der Siedetemperatur wird insbesondere erreicht, dass dem siedenden Wasser nicht zu viel Heizenergie zugeführt wird.

Sobald das Wasser Siedetemperatur erreicht hat, bleibt die Temperatur des Wassers stabil auf Siedetemperatur, wie dies in Figur 4a zu erkennen ist. Eine weitere Temperaturerhöhung über die Siedetemperatur hinaus ist physikalisch nicht möglich. Insofern eignet sich die Siedetemperatur T_{Siede} als Referenzpunkt für eine Kalibrierung des vom unteren Temperatursensor 10 erzeugten ersten Temperatursensorsignals 12.

Zur Durchführung der Kalibrierung ist erforderlich, dass sich das Wasser während eines vorgegebenen Zeitintervalls stabil auf der Siedetemperatur T_{Siede} befindet. Zu Beginn des Siedevorgangs ist die vom Temperatursensor 10 erfasste Temperatur häufig noch instabil. Beispielsweise kann durch die Bildung von Siedebläschen und die dadurch bewirkte Umwälzung des Wassers zunächst ein Kühleffekt am Boden des Kochbehältnisses auftreten. Daher sollte abgewartet werden, bis der Siedevorgang zu einer stabilen Temperatur am unteren Temperatursensor 10 geführt hat. Deshalb wird von der Steuereinheit 8 durch Auswerten des vom unteren Temperatursensor 10 gelieferten ersten Temperatursensorsignals 12 festgestellt, ob sich das Wasser im Kochbehältnis 2 während eines vorgegebenen Zeitintervalls 19 stabil auf der Siedetemperatur T_{Siede} befindet. Zusätzlich zum ersten Temperatursensorsignal 12 des unteren Temperatursensors 10 kann auch das zweite Temperatursensorsignal 13 des oberen Temperatursensors 11 mit ausgewertet werden, um zu erfassen, ob sich das Wasser im Kochbehältnis 2 stabil auf Siedetemperatur T_{Siede} befindet. Das Zeitintervall 19 kann beispielsweise zwischen 50 s und 300 s betragen, vorzugsweise 80 s. Wenn während des Zeitintervalls 19 die von den Temperatursensoren 10 und 11 erfassten Temperaturen stabil sind, dann wird noch ein weiteres Zeitintervall 20 gewartet. Anschließend wird während eines Messfensters 21 oder an einem Messpunkt der Wert des vom unteren Temperatursensor 10 gelieferten ersten Temperatursensorsignals 12 erfasst. Dieser Wert dient dann als Ausgangspunkt für die Kalibrierung.

Der erfasste Wert des ersten Temperatursensorsignals 12 hängt von verschiedenen Einflussfaktoren ab. Wenn es sich bei dem unteren Temperatursensor 10 beispielsweise um einen Heißleiter bzw. NTC handelt, wird sich bei gutem thermischem Kontakt zwischen dem Kochbehältnis, bei hoher Andruckkraft, mit der die in Figur 3 gezeigte metallische Kappe 14 gegen die Unterseite des Kochbehältnisses 2 gedrückt wird, bei guter thermischer Verbindung zwischen der metallischen Kappe 14 und dem unteren Temperatursensor 10 und bei geringem Abstand zwischen dem unteren Temperatursensor 10 und der Wandung des Kochbehältnisses 2 während des Messfensters 21 oder an dem Messpunkt ein vergleichsweise niedriger Wert des Widerstands des unteren Temperatursensors 10 ergeben, weil der untere Temperatursensor 10 relativ heiß wird. Wenn dagegen die thermische Kopplung zwischen der Wandung des Kochbehältnisses 2, der metallischen Kappe 14 und dem unteren Temperatursensor 10 eher schlecht ist, dann wird sich ein vergleichsweise hoher Wert des Widerstands des unteren Temperatursensors 10 ergeben, weil der untere Temperatursensor 10 in diesem Fall vergleichsweise kalt bleibt.

Der erfasste Wert des ersten Temperatursensorsignals 12 spiegelt daher die Einbausituation und die thermischen Umgebungsbedingungen des unteren Temperatursensors 10 wieder. Der erfasste Wert spiegelt beispielsweise wieder, wie gut oder schlecht die Wärmeübertragung von der Wandung des Kochbehältnisses 2 zum unteren Temperatursensor 10 ist. Der erfasste Wert gibt daher die thermischen Bedingungen, die thermische Leitfähigkeit, die Einbauverhältnisse und Einbaubedingungen des unteren Temperatursensors 10 des jeweiligen Geräts wieder und eignet sich daher sehr gut als Ausgangspunkt für eine Kalibrierung des vom unteren Temperatursensor 10 gelieferten ersten Temperatursensorsignals 12, damit man nach der Kalibrierung ein von den Unwägbarkeiten der individuellen Einbausituation unabhängiges erstes Temperatursensorsignal 12 erhält.

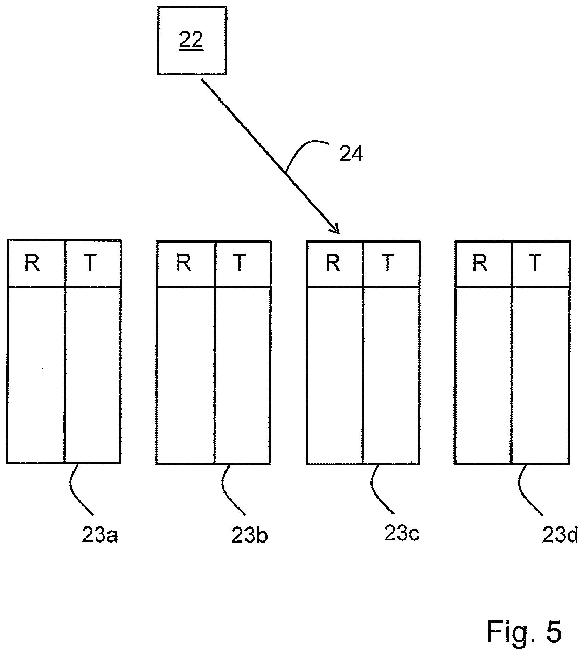

In Figur 5 ist ein Beispiel gezeigt, wie ausgehend von dem erfassten Wert 22 des ersten Temperatursensorsignals 12 eine Kalibrierung durchgeführt werden kann. In Figur 5 wird der erfasste Wert 22 des ersten Temperatursensorsignals 12 dazu verwendet, aus einer Anzahl von unterschiedlichen Konvertierungstabellen 23a bis 23d eine geeignete Konvertierungstabelle zur Umrechnung des ersten Temperatursensorsignals 12 in eine entsprechende Temperatur auszuwählen. Wie in Figur 5 veranschaulicht, sind hierzu in einem Speicher der Steuereinheit 8 eine Mehrzahl von unterschiedlichen Konvertierungstabellen 23a bis 23d für die Umwandlung des erfassten Werts 22 des ersten Temperatursensorsignals 12 in eine zugehörige Temperatur abgespeichert. Bei dem erfassten Wert des ersten Temperatursensorsignals 12 kann es sich beispielsweise um einen Widerstands- oder Spannungswert eines Widerstandssensors handeln. In diesem Fall kann jede der Konvertierungstabellen 23a bis 23d jeweils eine Anzahl von Widerstandswerten und von zugeordneten Temperaturwerten enthalten. Beispielsweise kann eine Konvertierungstabelle vorgesehen sein, die bei einer durch gute Wärmeleitung gekennzeichneten Einbausituation und bei Verwendung eines Heißleiters dementsprechend niedrigen Widerstandswerten eine Umrechnung von Widerstand in Temperatur vornimmt, wohingegen bei einer durch weniger gute Wärmeleitfähigkeit gekennzeichneten Einbausituation eine völlig andere Konvertierungstabelle für die Umrechnung des Widerstandswerts in eine zugehörige Temperatur verwendet wird. Da der erfasste Wert 22 des ersten Temperatursensorsignals 12 die Einbaubedingungen und die thermischen Umgebungsbedingungen des unteren Temperatursensors 10 kennzeichnet, kann der erfasste Wert 22 zur Auswahl einer für die jeweilige Einbausituation passenden Konvertierungstabelle herangezogen werden. Bei dem in Figur 5 gezeigten Beispiel würde anhand des erfassten Widerstandswerts entsprechend Pfeil 24 also beispielsweise die dritte Konvertierungstabelle 23c ausgewählt werden, die dann fortan für die Umsetzung von Widerstand in Temperatur verwendet wird.

Alternativ könnte man ausgehend von dem erfassten Wert des ersten Temperatursensorsignals 12 einen Korrekturfaktor bestimmen, mit dessen Hilfe die in einer einzigen Konvertierungstabelle abgelegte Beziehung zwischen Widerstandswerten und Temperaturwerten so modifiziert werden kann, dass sich eine Konvertierungstabelle ergibt. Auch so lässt sich eine Kalibrierung erreichen, mit der die erfasste Temperatur von der jeweiligen Einbausituation des unteren Temperatursensors 10 unabhängig wird.

In jedem Fall kann nach der Kalibrierung der erfasste Wert, beispielsweise ein Widerstands- oder Spannungswert, unmittelbar in eine zugehörige Temperatur umgesetzt werden. Dabei wird durch die Kalibrierung eine von der jeweiligen Einbausituation und den schwankenden thermischen Umgebungsbedingungen unabhängige Temperaturbestimmung ermöglicht. Die genaue Bestimmbarkeit der Temperatur des wässrigen Mediums 7 im Kochbehältnis 2 ermöglicht eine punktgenaue Ausführung der gespeicherten Koch- und Zubereitungsprogramme, die die Qualität der zubereiteten Speisen gewährleistet. Dabei kann eine indirekte Temperaturmessung verwendet werden, bei der die Temperatursensoren 10, 11 nicht in direktem Kontakt mit dem wässrigen Medium 7 stehen müssen. Da die beschriebene Kalibriermethode unabhängig von der individuellen Einbausituation und den thermischen Umgebungsbedingungen zu korrekten Resultaten führt, können auch Bauteile und Werkstoffe verwendet werden, die weniger hohe Anforderungen an die Passgenauigkeit und an die Fertigungstoleranzen erfüllen. Dadurch wird das Gerät insgesamt verbilligt. Durch die Verwendung des Siedepunkts als Referenz wird bei der Kalibrierung auf die tatsächliche Siedetemperatur beim jeweils herrschenden Luftdruck abgestellt, so dass man eine zum herrschenden Luftdruck passende Kalibrierung erhält.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

1 Kochvorrichtung
2 Kochbehältnis
3 Heizelement
4 Temperatursensor
5 Bedienelemente
6 Anzeigeelement
7 wässriges Medium
8 Steuereinheit
9 Steuersignal
10 unterer Temperatursensor
11 oberer Temperatursensor
12 erstes Temperatursensorsignal
13 zweites Temperatursensorsignal
14 metallische Kappe
15 Federelement
16 Innenwandung
17 Heizkurve
18 Umschaltzeitpunkt
19 Zeitintervall
20 weiteres Zeitintervall
21 Messfenster
22 erfasster Wert des ersten Temperatursensorsignals
23a bis 23d Konvertierungstabellen
24 Pfeil

## Patentansprüche

1. Eine Kochvorrichtung (1), welche aufweist
ein Kochbehältnis (2) zur Aufnahme eines wässrigen Mediums (7),
eine Heizvorrichtung (3) zum Heizen des Kochbehältnisses (2), und
einen Temperatursensor (4, 10), der dazu ausgelegt ist, eine Temperatur an einer vorbestimmten Stelle des Kochbehältnisses (2) zu erfassen und in Abhängigkeit von der Temperatur ein Temperatursensorsignal (12) zu erzeugen,
wobei die Kochvorrichtung (1) dazu ausgelegt ist, bei siedendem wässrigem Medium (7) einen Wert des Temperatursensorsignals (12) zu erfassen und basierend auf dem erfassten Wert eine Umsetzung des Temperatursensorsignals (12) in eine zugehörige Temperatur zu kalibrieren,
wobei
der Temperatursensor (4, 10) an einer Außenseite des Kochbehältnisses (2) an der Wandung angebracht ist,
**dadurch gekennzeichnet, dass**
die Kochvorrichtung (1) dazu ausgelegt ist, zu erfassen, ob das Temperatursensorsignal (12) für eine vorbestimmte Zeitspanne (19) stabil bleibt und ein Sieden des wässrigen Mediums (7) anzeigt und nach Ablauf der Zeitspanne (19) den Wert des Temperatursensorsignals (12) zu erfassen,
wobei
die Kalibrierung dazu ausgelegt ist, eine Umsetzung des Temperatursensorsignals (12) in eine zugehörige Temperatur so einzustellen, dass die erhaltene Temperatur um den Einfluss einer Einbausituation des Temperatursensors (4, 10), thermischer Umgebungsbedingungen des Temperatursensors (4, 10), einer Wärmeübertragung vom siedenden Medium (7) zum Temperatursensor (4, 10) ganz oder teilweise korrigiert ist.

2. Eine Kochvorrichtung (1) nach Anspruch 1, **dadurch gekennzeichnet, dass** die Kochvorrichtung (1) dazu ausgelegt ist, zur Kalibrierung des Temperatursensorsignals (12) die Heizvorrichtung (3) so zu steuern, dass das mit wässrigem Medium (7) befüllte Kochbehältnis (2) aufgeheizt wird, bis das wässrige Medium (7) siedet und bei siedendem wässrigem Medium (7) den Wert des Temperatursensorsignals (12) zu erfassen.

3. Eine Kochvorrichtung (1) nach Anspruch 1 oder Anspruch 2, **dadurch gekennzeichnet, dass** die Kochvorrichtung (1) dazu ausgelegt ist, anhand des Temperatursensorsignals (12) zu erfassen, wann das wässrige Medium (7) siedet und bei siedendem wässrigem Medium (7) den Wert des Temperatursensorsignals (12) zu erfassen.

4. Eine Kochvorrichtung (1) nach einem der Ansprüche 1 bis 3, **dadurch gekennzeichnet, dass** der Temperatursensor (4, 10) dazu ausgelegt ist, eine indirekte Temperaturmessung durchzuführen.

5. Eine Kochvorrichtung (1) nach einem der Ansprüche 1 bis 4, **dadurch gekennzeichnet, dass** der erfasste Wert des Temperatursensorsignals (12) kennzeichnend ist für eine Einbausituation des Temperatursensors (4, 10), für thermische Umgebungsbedingungen des Temperatursensors (4, 10), für eine Wärmeübertragung vom siedenden Medium (7) zum Temperatursensor (4, 10).

6. Eine Kochvorrichtung (1) nach einem der Ansprüche 1 bis 5, **dadurch gekennzeichnet, dass** die Kalibrierung dazu ausgelegt ist, die Abhängigkeit der aus dem Temperatursensorsignal (12) erhaltenen Temperatur von mindestens einem von Folgenden zu verringern oder zu beseitigen: von einer Einbausituation des Temperatursensors (4, 10), von thermischen Umgebungsbedingungen des Temperatursensors (4, 10), von einer Wärmeübertragung vom siedenden Medium (7) zum Temperatursensor (4, 10).

7. Eine Kochvorrichtung (1) nach einem der Ansprüche 1 bis 6, **dadurch gekennzeichnet, dass** die Kochvorrichtung (1) dazu ausgelegt ist, anhand des erfassten Werts des Temperatursensorsignals (12) aus einer Mehrzahl von Konvertierungstabellen (23a - 23d) für eine Umsetzung des Temperatursensorsignals (12) in eine zugehörige Temperatur eine geeignete Konvertierungstabelle (23a - 23d) auszuwählen.

8. Eine Kochvorrichtung (1) nach einem der Ansprüche 1 bis 6, **dadurch gekennzeichnet, dass** die Kochvorrichtung (1) dazu ausgelegt ist, zur Kalibrierung des Temperatursensorsignals (12) ausgehend von dem erfassten Wert des Temperatursensorsignals (12) einen Korrekturfaktor zu bestimmen, wobei die Kochvorrichtung (1) dazu ausgelegt ist, die Umsetzung des Temperatursensorsignals (12) in eine zugehörige Temperatur entsprechend dem Korrekturfaktor zu verändern.

9. Eine Kochvorrichtung (1) nach einem der Ansprüche 1 bis 8, **dadurch gekennzeichnet, dass** die Kochvorrichtung (1) dazu ausgelegt ist, die Heizvorrichtung (3) so zu steuern, dass sie entweder in einem kontinuierlichen Betrieb oder in einem intermittierenden Betrieb heizt.

10. Kochvorrichtung (1) nach Anspruch 9, **dadurch gekennzeichnet, dass** die Kochvorrichtung (1) dazu ausgelegt ist, die Heizvorrichtung (3) so zu steuern, dass sie das wässrige Medium (7) zunächst im kontinuierlichen Betrieb aufheizt und bei Erreichen einer vorgegebenen Umschalttemperatur (18) vom kontinuierlichen Betrieb auf den intermittierenden Betrieb umschaltet.

11. Eine Kochvorrichtung (1) nach einem der Ansprüche 1 bis 10, **dadurch gekennzeichnet, dass** es sich bei der Kochvorrichtung (1) um eines von folgenden handelt: einen Multifunktionskocher, einen elektrischen Kochtopf, einen Schnellkochtopf, einen Reiskocher, einen Dampfkochtopf.

12. Eine Kochvorrichtung (1) nach einem der Ansprüche 1 bis 11, **dadurch gekennzeichnet, dass** es sich bei dem wässrigen Medium (7) um Wasser handelt.

13. Ein Verfahren zur Umsetzung eines Temperatursensorsignals (12) in eine zugehörige Temperatur in einer Kochvorrichtung (1), welche aufweist:
ein Kochbehältnis (2) zur Aufnahme eines wässrigen Mediums (7),
eine Heizvorrichtung (3) zum Heizen des Kochbehältnisses (2), und
einen Temperatursensor (4, 10), der an einer Außenseite des Kochbehältnisses (2) an der Wandung angebracht ist, wobei der Temperatursensor (4, 10) dazu ausgelegt ist, eine Temperatur an einer vorbestimmten Stelle des Kochbehältnisses (2) zu erfassen und in Abhängigkeit von der Temperatur ein Temperatursensorsignal (12) zu erzeugen,
wobei das Verfahren folgende Schritte umfasst:
Erfassen eines Werts des Temperatursensorsignals (12) bei siedendem wässrigem Medium dergestalt, dass das Temperatursensorsignal (12) für eine vorbestimmte Zeitspanne (19) stabil bleibt und ein Sieden des wässrigen Mediums (7) anzeigt und nach Ablauf der Zeitspanne (19) den Wert des Temperatursensorsignals (12) erfasst,
Kalibrieren der Umsetzung des Temperatursensorsignals (12) in eine zugehörige Temperatur basierend auf dem erfassten Wert, wobei das Kalibrieren dergestalt ausgelegt ist, um eine Umsetzung des Temperatursensorsignals (12) in eine zugehörige Temperatur so einzustellen, dass die erhaltene Temperatur um den Einfluss einer Einbausituation des Temperatursensors (4, 10), thermischer Umgebungsbedingungen des Temperatursensors (4, 10), einer Wärmeübertragung vom siedenden Medium (7) zum Temperatursensor (4, 10) ganz oder teilweise korrigiert ist.

## Claims

1. A cooking apparatus (1), which has
a cooking container (2) for receiving an aqueous medium (7),
a heating device (3) for heating the cooking container (2), and
a temperature sensor (4, 10) which is designed to detect temperature at a predetermined point in the cooking container (2) and generate a temperature sensor signal (12) as a function of the temperature,
wherein the cooking apparatus (1) is designed to provide a value of the temperature sensor signal (12) when the aqueous medium (7) is boiling and to calibrate a conversion of the temperature sensor signal (12) into an associated temperature based on the detected value,
wherein
the temperature sensor (4, 10) is attached to an external side of the cooking container (2) on the wall,
**characterised in that**
the cooking apparatus (1) is designed to detect whether the temperature sensor signal (12) remains stable for a predetermined period of time (19) and displays a boiling of the aqueous medium (7) and after the period of time (19) has expired to detect the value of the temperature sensor signal (12),
wherein
the calibration is designed to adjust a conversion of the temperature sensor signal (12) into an associated temperature such that the temperature obtained is corrected to take account wholly or partially of the influence of an installation situation of the temperature sensor (4, 10), of thermal ambient conditions of the temperature sensor (4, 10), of a heat transfer from the boiling medium (7) to the temperature sensor (4, 10).

2. A cooking apparatus (1) according to claim 1, **characterised in that** the cooking apparatus (1) is designed to control the heating device (3) for the calibration of the temperature sensor signal (12) such that the cooking container (2) filled with aqueous medium (7)) is heated until the aqueous medium (7) boils and to detect the value of the temperature sensor signal (12) when the boiling aqueous medium (7) is boiling.

3. A cooking apparatus (1) according to claim 1 or claim 2, **characterised in that** the cooking apparatus (1) is designed to detect, based on the temperature sensor signal (12), when the aqueous medium (7) boils and, when the aqueous medium (7) is boiling, to detect the value of the temperature sensor signal (12).

4. A cooking apparatus (1) according to one of claims 1 to 3, **characterised in that** the temperature sensor (4, 10) is designed to carry out an indirect temperature measurement.

5. A cooking apparatus (1) according to one of claims 1 to 4, **characterised in that** the detected value of the temperature sensor signal (12) is characteristic of an installation situation of the temperature sensor (4, 10), of thermal ambient conditions of the temperature sensor (4, 10), of a heat transfer from the boiling medium (7) to the temperature sensor (4, 10).

6. A cooking apparatus (1) according to one of claims 1 to 5, **characterised in that** the calibration is designed to reduce or eliminate the dependence of the temperature obtained from the temperature sensor signal (12) on at least one of the following: on an installation situation of the temperature sensor (4, 10), on thermal ambient conditions of the temperature sensor (4, 10), on a heat transfer from the boiling medium (7) to the temperature sensor (4, 10).

7. A cooking apparatus (1) according to one of claims 1 to 6, **characterised in that** the cooking apparatus (1) is designed, based on the detected value of the temperature sensor signal (12), to select a suitable conversion table (23a-23d) from a plurality of conversion tables (23a - 23d) for converting the temperature sensor signal (12) into an associated temperature.

8. A cooking apparatus (1) according to one of claims 1 to 6, **characterised in that** the cooking apparatus (1) is designed to determine a correction factor for calibration of the temperature sensor signal (12) based on the detected value of the temperature sensor signal (12), wherein the cooking apparatus (1) is designed to change the conversion of the temperature sensor signal (12) into an associated temperature in accordance with the correction factor.

9. A cooking apparatus (1) according to one of claims 1 to 8, **characterised in that** the cooking apparatus (1) is designed to control the heating device (3) such that it heats either in a continuous mode or in an intermittent mode.

10. A cooking apparatus (1) according to claim 9, **characterised in that** the cooking apparatus (1) is designed to control the heating device (3) such that it first heats the aqueous medium (7) in continuous mode and when a predetermined changeover temperature (18) is reached switches from continuous mode to intermittent mode.

11. A cooking apparatus (1) according to one of claims 1 to 10, **characterised in that** the cooking apparatus (1) is one of the following: a multi-function cooker, an electric saucepan, a pressure cooker, a rice cooker, a steamer.

12. A cooking apparatus (1) according to one of claims 1 to 11, **characterised in that** the aqueous medium (7) is water.

13. A method for converting a temperature sensor signal (12) into an associated temperature in a cooking apparatus (1), which has:
a cooking container (2) for receiving an aqueous medium (7),
a heating device (3) for heating the cooking container (2), and
a temperature sensor (4, 10) which is attached to an external side of the cooking container (2) on the wall, wherein the temperature sensor (4, 10) is designed to detect a temperature at a predetermined point in the cooking container (2) and generate a temperature sensor signal (12) as a function of the temperature,
wherein the method comprises the following steps:
detecting a value of the temperature sensor signal (12) when the aqueous medium is boiling, such that the temperature sensor signal (12) remains stable for a predetermined period of time (19) and displays a boiling of the aqueous medium (7) and after the period of time (19) has expired detects the value of the temperature sensor signal (12), calibrating the conversion of the temperature sensor signal (12) into an associated temperature based on the detected value, wherein the calibration is designed such that in order to adjust a conversion of the temperature sensor signal (12) into an associated temperature such that the temperature obtained is corrected to take account wholly or partially of the influence of an installation situation of the temperature sensor (4, 10), of thermal ambient conditions of the temperature sensor (4, 10), of a heat transfer from the boiling medium (7) to the temperature sensor (4, 10).

## Revendications

1. Dispositif de cuisson (1) lequel présente
un récipient de cuisson (2) destiné à réceptionner un milieu aqueux (7),
un dispositif de chauffage (3) destiné à chauffer le récipient de cuisson (2), et
un capteur de température (4, 10) qui est conçu pour détecter une température à un endroit prédéterminé du récipient de cuisson (2) et, en fonction de la température, pour générer un signal de capteur de température (12),
le dispositif de cuisson (1) étant conçu, lorsque le milieu aqueux (7) est en ébullition, pour détecter une valeur du signal de capteur de température (12) et, sur la base de la valeur détectée, pour calibrer une conversion du signal de capteur de température (12) en une température correspondante,
le capteur de température (4, 10) étant placé sur la paroi sur un côté extérieur du récipient de cuisson (2),
**caractérisé en ce que**
le dispositif de cuisson (1) est conçu pour détecter si le signal de capteur de température (12) reste stable pour une période de temps prédéterminée (19) et s'il indique une ébullition du milieu aqueux (7), et, après expiration de la période de temps (19), pour détecter la valeur du signal de capteur de température (12),
le calibrage étant conçu pour régler une conversion du signal de capteur de température (12) en une température correspondante de manière à ce que la température obtenue soit complètement ou partiellement corrigée de l'influence d'une situation de montage du capteur de température (4, 10), de conditions thermiques ambiantes du capteur de température (4, 10), d'un transfert de chaleur du milieu (7) en ébullition vers le capteur de température (4, 10).

2. Dispositif de cuisson (1) selon la revendication 1, **caractérisé en ce que** le dispositif de cuisson (1) est conçu, dans le but de calibrer le signal de capteur de température (12), pour régler le dispositif de chauffage (3) de manière à ce que le récipient de cuisson (2) rempli avec le milieu aqueux (7) soit échauffé jusqu'à ce que le milieu aqueux (7) soit en ébullition, et pour détecter la valeur du signal de capteur de température (12) lorsque le milieu aqueux (7) est en ébullition.

3. Dispositif de cuisson (1) selon la revendication 1 ou la revendication 2, **caractérisé en ce que** le dispositif de cuisson (1) est conçu pour détecter à l'aide du signal de capteur de température (12) quand le milieu aqueux (7) est en ébullition, et pour détecter la valeur du signal de capteur de température (12) lorsque le milieu aqueux (7) est en ébullition.

4. Dispositif de cuisson (1) selon l'une quelconque des revendications 1 à 3, **caractérisé en ce que** le capteur de température (4, 10) est conçu pour réaliser une mesure de température indirecte.

5. Dispositif de cuisson (1) selon l'une quelconque des revendications 1 à 4, **caractérisé en ce que** la valeur détectée du signal de capteur de température (12) est caractéristique pour une situation de montage du capteur de température (4, 10), pour des conditions thermiques ambiantes du capteur de température (4, 10), pour un transfert de chaleur du milieu (7) en ébullition vers le capteur de température (4, 10).

6. Dispositif de cuisson (1) selon l'une quelconque des revendications 1 à 5, **caractérisé en ce que** le calibrage est conçu pour diminuer ou éliminer la dépendance de la température obtenue à partir du signal de capteur de température (12) d'au moins l'un des éléments suivants : d'une situation de montage du capteur de température (4, 10), de conditions thermiques ambiantes du capteur de température (4, 10), d'un transfert de chaleur du milieu (7) en ébullition vers le capteur de température (4, 10).

7. Dispositif de cuisson (1) selon l'une quelconque des revendications 1 à 6, **caractérisé en ce que** le dispositif de cuisson (1) est conçu, à l'aide de la valeur détectée du signal de capteur de température (12), pour sélectionner un tableau de conversion (23a - 23d) adéquat à partir d'une pluralité de tableaux de conversion (23a - 23d) pour une conversion du signal de capteur de température (12) en une température correspondante.

8. Dispositif de cuisson (1) selon l'une quelconque des revendications 1 à 6, **caractérisé en ce que** le dispositif de cuisson (1) est conçu, dans le but de calibrer le signal de capteur de température (12), pour déterminer un facteur de correction en partant de la valeur détectée du signal de capteur de température (12), le dispositif de cuisson (1) étant conçu pour modifier la conversion du signal de capteur de température (12) en une température correspondante conformément au facteur de correction.

9. Dispositif de cuisson (1) selon l'une quelconque des revendications 1 à 8, **caractérisé en ce que** le dispositif de cuisson (1) est conçu pour commander le dispositif de chauffage (3) de manière à ce qu'il chauffe soit en service continu soit en service intermittent.

10. Dispositif de cuisson (1) selon la revendication 9, **caractérisé en ce que** le dispositif de cuisson (1) est conçu pour commander le dispositif de chauffage (3) de manière à ce que le milieu aqueux (7) s'échauffe d'abord en service continu et, lorsqu'une température de commutation (18) prédéfinie est obtenue, commute du service continu sur le service intermittent.

11. Dispositif de cuisson (1) selon l'une quelconque des revendications 1 à 10, **caractérisé en ce que** le dispositif de cuisson (1) est l'un des produits suivants : un cuiseur multifonctions, une cocotte électrique, un autocuiseur, un cuiseur pour riz, un cuiseur à vapeur.

12. Dispositif de cuisson (1) selon l'une quelconque des revendications 1 à 11, **caractérisé en ce que** le milieu aqueux (7) est de l'eau.

13. Procédé de conversion d'un signal de capteur de température (12) en une température correspondante dans un dispositif de cuisson (1) lequel présente :
un récipient de cuisson (2) destiné à réceptionner un milieu aqueux (7),
un dispositif de chauffage (3) destiné à chauffer le récipient de cuisson (2), et
un capteur de température (4, 10) qui est placé sur la paroi sur un côté extérieur du récipient de cuisson (2), le capteur de température (4, 10) étant conçu pour détecter une température à un endroit prédéterminé du récipient de cuisson (2) et, en fonction de la température, pour générer un signal de capteur de température (12),
le procédé comprenant les étapes suivantes :
détection d'une valeur du signal de capteur de température (12) lorsque le milieu aqueux (7) est en ébullition de manière à ce que le signal de capteur de température (12) reste stable pour une période de temps (19) prédéterminée et indique une ébullition du milieu aqueux (7) et détecte la valeur du signal de capteur de température (12) après expiration de la période de temps (19),
calibrage de la conversion du signal de capteur de température (12) en une température correspondante sur la base de la valeur détectée, le calibrage étant conçu pour régler une conversion du signal de capteur de température (12) en une température correspondante de manière à ce que la température obtenue soit complètement ou partiellement corrigée de l'influence d'une situation de montage du capteur de température (4, 10), de conditions thermiques ambiantes du capteur de température (4, 10), d'un transfert de chaleur du milieu (7) en ébullition vers le capteur de température (4, 10).
